Europäisches Patentamt

European Patent Office

Office européen des brevets

(19)

(11) **EP 1 677 516 A1**

(12) **EUROPEAN PATENT APPLICATION**
published in accordance with Art. 158(3) EPC

(43) Date of publication:
**05.07.2006 Bulletin 2006/27**

(51) Int Cl.:
***H04N 5/208*** (1985.01)

(21) Application number: **04792321.4**

(22) Date of filing: **13.10.2004**

(86) International application number:
**PCT/JP2004/015080**

(87) International publication number:
**WO 2005/041560 (06.05.2005 Gazette 2005/18)**

(84) Designated Contracting States:
**DE FR GB**

(30) Priority: **24.10.2003 JP 2003365185**

(71) Applicant: **Olympus Corporation
Tokyo 151-0072 (JP)**

(72) Inventor: **SAMBONGI, Masao,
c/o Olympus Corporation
Tokyo 1510072 (JP)**

(74) Representative: **von Hellfeld, Axel
Wuesthoff & Wuesthoff
Schweigerstrasse 2
81541 München (DE)**

(54) **SIGNAL PROCESSING SYSTEM, SIGNAL PROCESSING METHOD, AND SIGNAL PROCESSING PROGRAM**

(57) A signal-processing system comprising an estimating unit (5) for estimating an amount of noise or a scene as a characteristic amount from an image signal captured by CCD (2) and provided by a preprocessing unit (3) in digital form, an edge-extracting unit (6) for extracting an edge component of an image associated with the image signal, a correction-coefficient calculating unit (7) for calculating a correction coefficient for correcting the edge component on the basis of the characteristic amount and the edge component, and an edge-enhancing unit (8) for performing edge enhancement with respect to the image signal on the basis of the edge component and the correction coefficient.

## FIG.1

**Description**

Technical Field

The present invention relates to a signal-processing system, a signal-processing method, and a signal-processing program for processing image signals in digital form.

Background Art

Hitherto, edge enhancement for sharpening edges of images has been used. One such edge enhancement employs, for example, means for differentiating supplied image signals.

In most cases, however, image signals include noise components, and therefore, the edge enhancement using differentiation, as mentioned above, has a problem in that these noise components are also enhanced.

A technology to address such a problem is disclosed in, for example, Japanese Unexamined Patent Application Publication No. 58-222383, in which smoothing is performed before edge extraction so as to remove noise included in input images, and edge enhancement is then carried out.

For the means performing edge enhancement by differentiation as described above, the object type of a subject included in an input image is not identified. Therefore, efficient edge enhancement in accordance with the subject is not realized.

In contrast, for example, Japanese Unexamined Patent Application Publication No. 9-270005 discloses processing in which an input image is divided into areas in accordance with brightness and the edges of the areas are enhanced appropriately. In other words, classification of subjects by brightness has been conducted.

However, the use of the means in which smoothing is carried out before edge extraction, as disclosed in Japanese Unexamined Patent Application Publication No. 58-222383, blurs even portions that are originally edges by smoothing. Therefore, satisfactorily efficient edge enhancement is not realized.

The means dividing into areas according to brightness, as described in Japanese Unexamined Patent Application Publication No. 9-270005, performs insufficient edge enhancement in accordance with a subject since the means cannot identify the subject in terms of a characteristic color, such as the color of human skin, that of the sky, or that of a plant.

The present invention which has been made under such circumstances as mentioned above is to provide a signal-processing system, a signal-processing method and a signal-processing program, that can ensure performing edge enhancement properly and effectively.

Disclosure of Invention

Means for Solving the Problem

In order to achieve the above object, the signal-processing system of a first aspect of the invention is the one for performing signal processing in an image signal in digital form, comprising: estimating means for estimating a characteristic amount of an image associated with the image signal on the basis of the image signal; edge-extracting means for extracting from the image signal an edge component of the image associated with the image signal; correction-coefficient calculating means for calculating a correction coefficient with respect to the edge component on the basis of the characteristic amount; and edge-enhancing means for performing edge enhancement with respect to the image signal on the basis of the edge component and the correction coefficient.

The signal-processing system of a second aspect of the invention is the one according to the first aspect of the invention, further comprising: edge-controlling means for controlling at least one of the edge-extracting means and the edge-enhancing means on the basis of the characteristic amount.

The signal-processing system of a third aspect of the invention is the one according to the second aspect of the invention, wherein the estimating means is the one configured to have noise-estimating means for estimating the amount of noise as the characteristic amount; and the edge-controlling means is the one to control so as to stop the operation of the edge-extracting means based on the amount of noise.

The signal-processing system of a fourth aspect of the invention is the one according to the second aspect of the invention, wherein the edge-extracting means is the one to extract the edge component from the image signal using a filter in which a coefficient is arranged so as to correspond to a pixel arrangement of a predetermined size; and the edge-controlling means is the one to control the edge-extracting means so as to permit switching of at least one of the size and the coefficient of the filter.

The signal-processing system of a fifth aspect of the invention is the one according to the first aspect of the invention, wherein the estimating means is the one configured to have image-dividing means for dividing the image associated with the image signal into a plurality of areas based on the characteristic amount in the image signal; the correction-coefficient calculating means is the one to calculate the correction coefficient for each of the areas divided by the image-dividing means; and the edge-enhancing means is the one to perform the edge enhancement with respect to the image signal for each of the areas divided by the image-dividing means.

The signal-processing system of a sixth aspect of the invention is the one according to the fifth aspect of the invention, wherein the image-dividing means is the one to divide the image associated with the image signal into a plurality of areas based on the color of each pixel as the characteristic amount.

The signal-processing system of a seventh aspect of the invention is the one according to the first aspect of the invention, wherein the estimating means is the one configured to have noise-estimating means for estimating the amount of noise as the characteristic amount; and the correction-coefficient calculating means is the one to calculate the correction coefficient with respect to the edge component on the basis of the amount of noise.

The signal-processing system of an eighth aspect of the invention is the one according to the seventh aspect of the invention, wherein the noise-estimating means is the one comprising: image-area extracting means for extracting an area of a predetermined size from the image signal; average-luminance calculating means for calculating an average luminance value in the area; amplification-factor calculating means for calculating an amplification factor with respect to the image associated with the image signal; and noise calculating means for calculating the amount of noise based on the average luminance value and the amplification factor.

The signal-processing system of a ninth aspect of the invention is the one according to the eighth aspect of the invention as mentioned above, wherein the noise calculating means is the one to calculate the amount of noise based on a predetermined functional formula associated with the average luminance value and the amplification factor.

The signal-processing system of a tenth aspect of the invention is the one according to the eighth aspect of the invention, wherein the noise calculating means is the one to calculate the amount of noise based on a predetermined table associated with the average luminance value and the amplification factor.

The signal-processing system of an eleventh aspect of the invention is the one according to the seventh aspect of the invention, wherein the edge-enhancing means is the one to perform coring processing of replacing an input edge component with zero so as to make an output edge component thereby; and the correction-coefficient calculating means is the one configured to have coring-adjusting means for setting an adjusting range of coring processing performed by the edge-enhancing means based on the amount of noise.

The signal-processing system of a twelfth aspect of the invention is the one according to the ninth aspect of the invention, wherein the amplification-factor calculating means is the one configured to have standard-value supplying means for supplying a predetermined standard amplification factor when the amplification factor with respect to the image associated with the image signal is not received.

The signal-processing system of a thirteenth aspect of the invention is the one according to the first invention, wherein the estimating means is the one configured to have scene-estimating means for estimating a scene of the image associated with the image signal as the characteristic amount; and the correction-coefficient calculating means is the one to calculate the correction coefficient with respect to the edge component based on the shooting scene.

The signal-processing system of a fourteenth aspect of the invention is the one according to the thirteenth aspect of the invention, wherein the scene-estimating means is the one to estimate the scene based on a characteristic color that is contained in the image obtained from the image signal and a range where the characteristic color is present.

The signal-processing system of a fifteenth aspect of the invention is the one according to the thirteenth aspect of the invention, wherein the edge-enhancing means is the one to perform coring processing of replacing an input edge component with zero so as to make an output edge component; and the correction-coefficient calculating means is the one configured to have coring-adjusting means for setting an adjusting range of the coring processing performed by the edge-enhancing means based on the scene.

The signal-processing method of a sixteenth aspect of the invention is the one with respect to an image signal in digital form, comprising steps of: performing a process of estimating a characteristic amount of an image associated with the image signal based on the image signal and a process of extracting an edge component of the image associated with the image signal from the image signal in any sequence or in parallel with each other; calculating a correction coefficient with respect to the edge component based on the characteristic amount; and performing edge enhancement with respect to the image signal based on the edge component and the correction coefficient.

The signal-processing method of a seventeenth aspect of the invention is the one according to the sixteenth aspect of the invention, wherein the characteristic amount is the amount of noise.

The signal-processing method of an eighteenth aspect of the invention is the one according to the sixteenth aspect of the invention, wherein the characteristic amount is the one associated with a scene.

The signal-processing method of a nineteenth aspect of the invention is the one according to the sixteenth aspect of the invention, further comprising a step of: dividing the image associated with the image signal into a plurality of areas based on the characteristic amount contained in the image signal; wherein the step of calculating the correction-coefficient is the one for calculating the correction coefficient for each of the divided areas, and the step of performing edge enhancement is the one for performing the edge enhancement for each of the divided areas.

The signal-processing program of a twentieth aspect of the invention is the one for causing a computer to function as: estimating means for estimating a characteristic amount of an image associated with an image signal in digital form based on the image signal; edge-extracting means for extracting from the image signal an edge component of the image associated with the image signal; correction-coefficient calculating means for calculating a correction coefficient with respect to the edge component based on the characteristic amount; and edge-enhancing means for performing edge enhancement with respect to the image signal based on the edge component and the correction coefficient.

BRIEF DESCRIPTION OF THE DRAWINGS

Fig. 1 is a block diagram showing the structure of a signal-processing system according to a first embodiment of the present invention;
Fig. 2 is a block diagram showing a first example of the structure of an estimating unit according to the first embodiment;
Fig. 3 is a block diagram showing a second example of the structure of the estimating unit according to the first embodiment;
Fig. 4 is an illustration for explaining an area division pattern of an image according to the first embodiment;
Fig. 5 is a block diagram showing an example of the structure of an edge-extracting unit according to the first embodiment;
Fig. 6 is a block diagram showing an example of the structure of a correction-coefficient calculating unit according to the first embodiment;
Fig. 7 is a diagram showing the shapes of functions of the relationship between the luminance value and the amount of noise, the functions being recorded on a parameter ROM, according to the first embodiment;
Fig. 8 is a diagram for explaining a coring adjustment according to the first embodiment;
Fig. 9 is a flowchart showing an example of software signal processing in accordance with noise estimation according to the first embodiment;
Fig. 10 is a flowchart showing an example of software signal processing in accordance with scene estimation according to the first embodiment;
Fig. 11 is a block diagram showing the structure of a signal-processing system according to a second embodiment of the present invention;
Fig. 12 is a block diagram showing an example of the structure of an edge-extracting unit according to the second embodiment;
Fig. 13 is a block diagram showing the structure of a signal-processing system according to a third embodiment of the present invention;
Fig. 14 is a block diagram showing an example of the structure of an image-dividing unit according to the third embodiment; and
Fig. 15 is a flowchart showing an example of software signal processing based on a signal-processing program according to the third embodiment.

Best Mode for Carrying Out the Invention

In the below, the embodiments of the present invention will be described with reference to the accompanying drawings.

First Embodiment

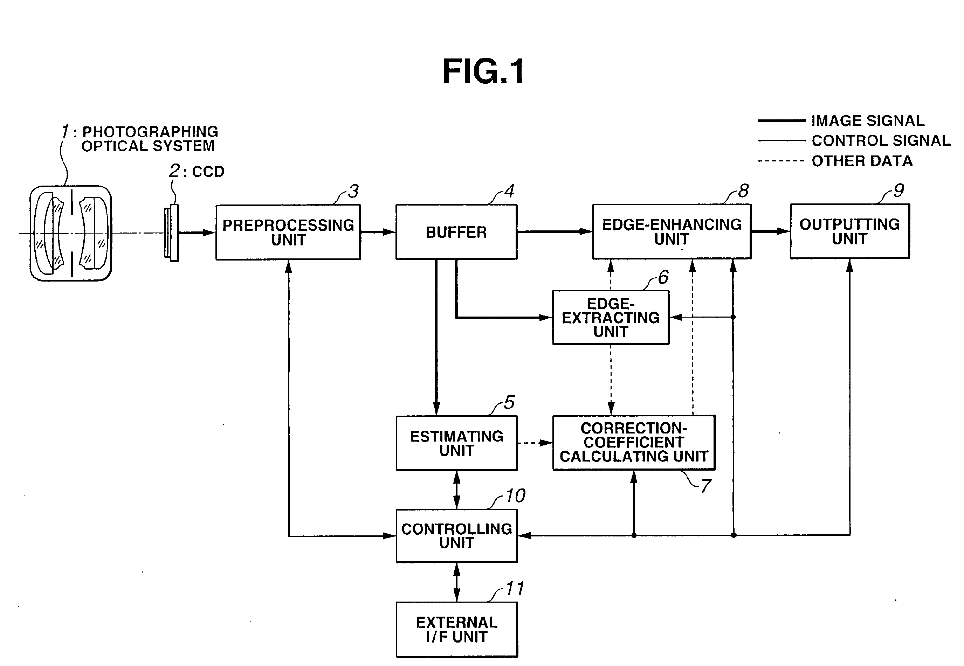

Figs. 1 to 10 illustrate a first embodiment of the present invention. Fig. 1 is a block diagram showing the structure of a signal-processing system.
Referring to Fig. 1, this signal-processing system includes a photographing optical system 1 for forming a subject image; a charge-coupled device (CCD) 2 constituting an image-capturing device for photoelectrically converting the optical subject image formed by the photographing optical system 1 to output an electrical image signal; a preprocessing unit 3 for amplifying a gain of the analog image signal output from the CCD 2 and analog-to-digital converting the image signal into digital form and for performing processing, such as autofocus (AF) control or auto-exposure (AE) control; a buffer 4 for temporarily storing the digital image signal output from the preprocessing unit 3; an estimating unit 5 serving as estimating means for performing processing, such as noise estimation or scene estimation, which are described later, with respect to the image signal read from the buffer 4; an edge-extracting unit 6 serving as edge-extracting means for reading an area having a predetermined size in the image signal from the buffer 4 and extracting an edge component in the area; a correction-coefficient calculating unit 7 serving as correction-coefficient calculating means for calculating a correction coefficient with respect to the edge component on the basis of a result estimated by the estimating unit 5 and the edge component extracted by the edge-extracting unit 6; an edge-enhancing unit 8 serving as edge-enhancing means for extracting an area having a predetermined size in the image signal from the buffer 4 and performing edge enhancement on the basis of the edge component supplied from the edge-extracting unit 6 and the correction coefficient supplied from the correction-coefficient calculating unit 7; an outputting unit 9 for outputting the image signal subjected to processing performed by the edge-enhancing unit 8 in order to record the image signal on, for example, a memory card and thus save it; an external interface (I/F) unit 11 including a power-on switch, a shutter button, an interface used for switching between different modes in image-capturing, and the like; and a controlling unit 10 interactively connected to the preprocessing unit 3, the estimating unit 5, the edge-extracting unit 6, the correction-coefficient calculating unit 7, the edge-enhancing unit 8, the outputting unit 9, and the external I/F unit 11 and comprising a microcomputer for comprehensively controlling the overall signal-processing system including these units.

The flow of signals in the signal-processing system shown in Fig. 1 will now be described.

In the image-capturing system, an image-capturing condition, such as an ISO sensitivity, can be set via the external I/F unit 11. After this setting is completed, pushing the shutter button in the external I/F unit 11 starts the CCD 2 capturing an image signal.

The image signal captured by the CCD 2 via the photographing optical system 1 is output and is subjected to gain amplification and analog-to-digital conversion performed by the preprocessing unit 3. The image signal is then transferred to the buffer 4 and is stored.

The estimating unit 5 reads the image signal from the buffer 4, calculates a characteristic amount by performing processing, such as noise estimation or scene estimation, which is described later, and transfers the calculated characteristic amount to the correction-coefficient calculating unit 7 under the control of the controlling unit 10.

The edge-extracting unit 6 extracts and reads an area having a predetermined size in the image signal stored in the buffer 4 and extracts an edge component in the area under the control of the controlling unit 10. Then, the edge-extracting unit 6 transfers the extracted edge component to the correction-coefficient calculating unit 7 and the edge-enhancing unit 8.

The correction-coefficient calculating unit 7 calculates a correction coefficient with respect to the edge component in accordance with the estimated amount supplied from the estimating unit 5 and the edge component supplied from the edge-extracting unit 6 under the control of the controlling unit 10, and then transfers the correction coefficient to the edge-enhancing unit 8.

The edge-enhancing unit 8 extracts and reads an area having a predetermined size in the image signal stored in the buffer 4 under the control of the controlling unit 10 and performs edge enhancement on the basis of the edge component supplied from the edge-extracting unit 6 and the correction coefficient supplied from the correction-coefficient calculating unit 7. The edge enhancement may be performed on a G component in R, G, and B signals or may be performed on a luminance signal calculated from R, G, and B signals.

In this embodiment, each processing at the estimating unit 5, the edge-extracting unit 6, the correction-coefficient calculating unit 7, and the edge-enhancing unit 8, as described above, is carried out in units of areas, each having a predetermined size, in synchronism with each other under the control of the controlling unit 10.

The image signal subjected to edge enhancement as described above is sequentially transferred to the outputting unit 9 in units of areas, each having a predetermined size, so that the image signal is sequentially recorded on a memory card or the like by the outputting unit 9 and thus saved.

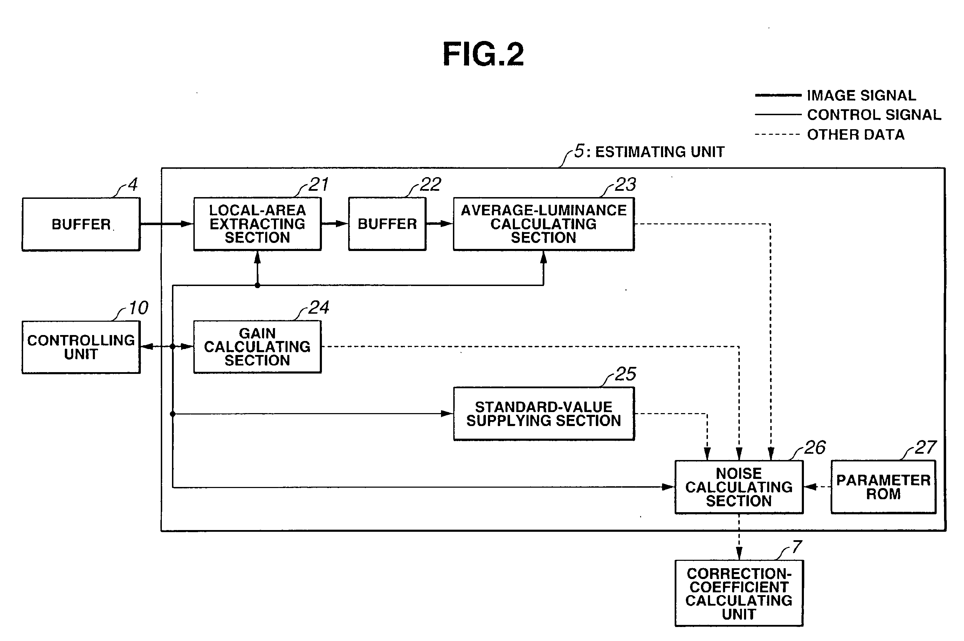

Fig. 2 is a block diagram showing a first example of the structure of the estimating unit 5.

Fig. 2 illustrates the structure of the estimating unit 5 serving as noise-estimating means having a noise-estimating function.

This estimating unit 5 includes a local-area extracting section 21 serving as image-area extracting means for extracting and reading a local area having a predetermined size from an image signal stored in the buffer 4; a buffer 22 for temporarily storing the image signal in the local area read by the local-area extracting section 21; an average-luminance calculating section 23 serving as average-luminance calculating means for calculating an average value of luminance in the local area stored in the buffer 22; a gain calculating section 24 serving as amplification-factor calculating means for calculating an amplification factor of the gain amplification performed by the preprocessing unit 3 in accordance with an ISO sensitivity set via the external I/F unit 11; a standard-value supplying section 25 serving as standard-value supplying means for supplying a standard amplification factor when information indicating the ISO sensitivity is not set; a parameter ROM 27 included in noise calculating means and used for storing the relationship between the amplification factor and function information used for calculating the amount of noise; and a noise calculating section 26 serving as the noise calculating means for retrieving corresponding function information from the parameter ROM 27 in accordance with the amplification factor transferred from the gain calculating section 24 or the standard-value supplying section 25, for calculating the amount of noise by substituting the average luminance transferred from the average-luminance calculating section 23 into a function based on the retrieved function information, and for transferring the calculated amount of noise to the correction-coefficient calculating unit 7.

The controlling unit 10 is interactively connected to the local-area extracting section 21, the average-luminance calculating section 23, the gain calculating section 24, the standard-value supplying section 25, and the noise calculating section 26 so as to control these sections.

The flow of processing in this estimating unit 5 will now be described.

The preprocessing unit 3 amplifies a gain of an image signal transferred from the CCD 2 in accordance with the ISO sensitivity set via the external I/F unit 11.

The gain calculating section 24 determines an amplification factor of the gain amplification performed by the preprocessing unit 3 under the control of the controlling unit 10 and transfers the amplification factor to the noise calculating section 26.

In the signal-processing system according to this embodiment, it is assumed that the ISO sensitivity can be set at, for example, three levels: 100, 200, and 400. The ISO sensitivities 100, 200, and 400 correspond to the amplification factors of 1, 2, and 4, respectively. When no information indicating the ISO sensitivity is received, the controlling unit 10 controls the standard-value supplying section 25 so that the standard-value supplying section 25 transfers a predetermined amplification factor, for example, of 1, which corresponds to the ISO sensitivity 100, to the noise calculating section 26.

The noise calculating section 26 retrieves function information that corresponds to the amplification factor supplied from the gain calculating section 24 or the standard-value supplying section 25 and that is used for calculating the amount of noise, from the parameter ROM 27.

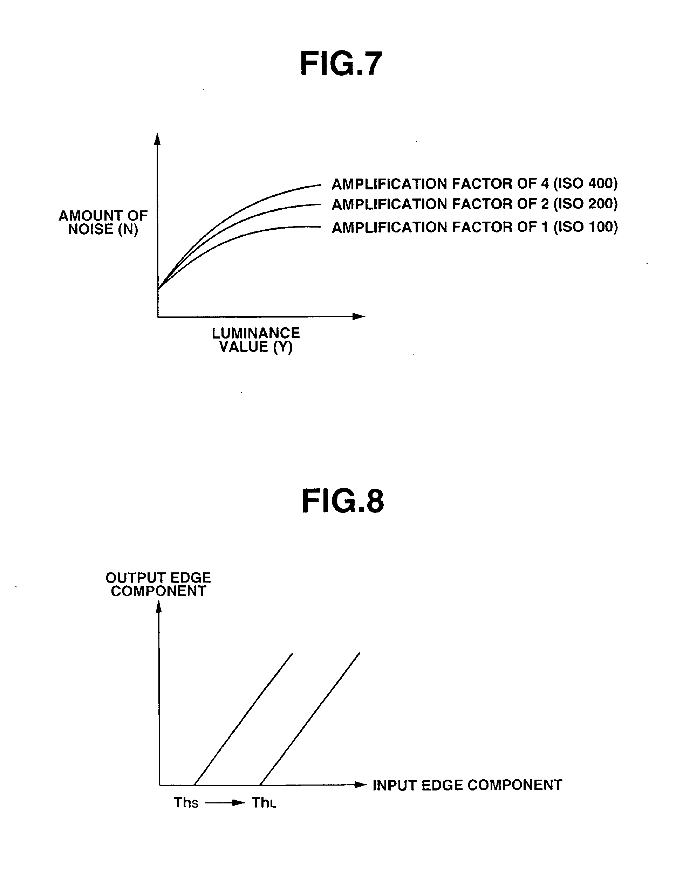

Such a function used for calculating the amount of noise will be described with reference to Fig. 7. Fig. 7 is a diagram showing the shapes of functions of the relationship between the luminance value and the amount of noise, the functions being recorded on the parameter ROM 27.

As shown in Fig. 7, the amount of noise N substantially increases as a power of the luminance value Y. This is modeled by a function expressed by the following expression 1:

**[Expression 1]**

$$N = \alpha Y^{\beta} + \gamma$$

where $\alpha$, $\beta$, and $\gamma$ are constants.

Since noise is amplified or reduced by gain processing performed by the preprocessing unit 3 together with an image signal, the amount of noise increases or decreases depending on the amplification factor in the gain processing of the preprocessing unit 3. Fig. 7 shows variations in the amount of noise N with respect to the luminance value Y using ISO sensitivities 100, 200, and 400 (i.e., the amplification factors 1, 2, and 4) as parameters, with the three curves indicating the functions corresponding to these three parameters.

In consideration of the difference in amplification factors, expression 1 is written as a function expressed by the following expression 2:

**[Expression 2]**

$$N = \alpha_i Y^{\beta_i} + \gamma_i$$

where i is a parameter representing an amplification factor; i = 1, 2, and 4 for this embodiment.

The parameter ROM 27 stores constant terms $\alpha_i$, $\beta_i$, and $\gamma_i$ (i.e., constant terms $\alpha$, $\beta$, and $\gamma$, each corresponding to an amplification factor i) in expression 2.

Upon receipt of an amplification factor from the gain calculating section 24 or the standard-value supplying section 25, the noise calculating section 26 reads the constant terms $\alpha_i$, $\beta_i$, and $\gamma_i$ that correspond to the received amplification factor i from the parameter ROM 27. Since the amplification factor is common to an image signal of a single image, each of the constant terms $\alpha_i$, $\beta_i$, and $\gamma_i$ is read only once with respect to an image signal of a single image, not in units of local areas.

The local-area extracting section 21 then extracts an area having a predetermined size (e.g., 5 × 5 pixels) from the image signal stored in the buffer 4 under the control of the controlling unit 10 and transfers it to the buffer 22.

The average-luminance calculating section 23 calculates the luminance value Y with respect to each pixel of the area stored in the buffer 22 under the control of the controlling unit 10 by the use of the following expression 3:

[Expression 3]

$$Y = 0.299R + 0.587G + 0.114B$$

The average-luminance calculating section 23 calculates an average of luminance signals calculated in units of pixels in a local area and transfers it to the noise calculating section 26.

The noise calculating section 26 calculates the amount of noise by substituting the average luminance value transferred from the average-luminance calculating section 23 into the luminance value Y in expression 2 and transfers the calculated amount of noise to the correction-coefficient calculating unit 7. The amount of noise calculated by the noise calculating section 26 is regarded as that for the center pixel in the local area extracted by the local-area extracting section 21.

The local-area extracting section 21 calculates the amount of noise with respect to the entire image signal under the control of the controlling unit 10 while moving a local area having a predetermined size pixel by pixel in the horizontal or vertical direction.

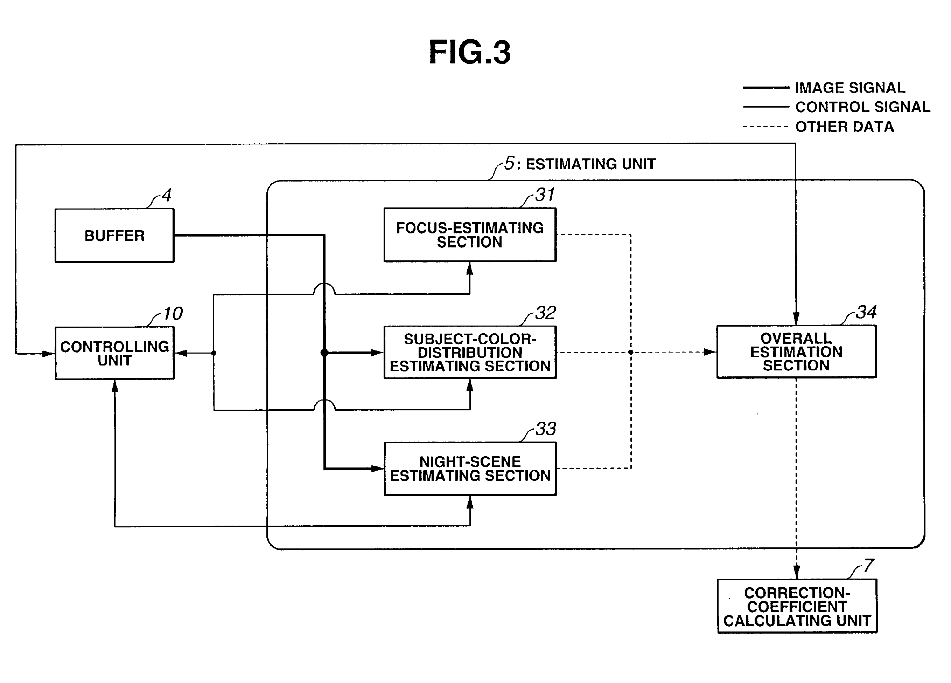

Fig. 3 is a block diagram showing a second example of the structure of the estimating unit 5.

Fig. 3 illustrates the structure of the estimating unit 5 serving as scene estimating means having a scene estimating function.

This estimating unit 5 includes a focus-estimating section 31 for acquiring AF information set in the preprocessing unit 3 via the controlling unit 10 and classifying the AF information according to a focal point; a subject-color-distribution estimating section 32 for dividing an image signal stored in the buffer 4 into a plurality of areas and calculating an average color in each area in the form of a predetermined color space; a night-scene estimating section 33 for acquiring AE information set in the preprocessing unit 3 via the controlling unit 10, calculating an average luminance level of the entire image area using the image signal stored in the buffer 4, and estimating whether the captured image is a night scene or not by comparing the average luminance level with a predetermined condition; and an overall estimation section 34 for estimating a scene on the basis of information from the focus-estimating section 31, the subject-color-distribution estimating section 32, and the night-scene estimating section 33 and transferring the estimation result to the correction-coefficient calculating unit 7.

The controlling unit 10 is interactively connected to the focus-estimating section 31, the subject-color-distribution estimating section 32, the night-scene estimating section 33, and the overall estimation section 34 so as to control these sections.

The flow of processing in this estimating unit 5 will now be described.

The focus-estimating section 31 acquires AF information set in the preprocessing unit 3 from the controlling unit 10 and determines whether the focus is in a range of 5 m to infinity (landscape photography), 1 m to 5 m (figure photography), or 1 m or less (macrophotography) from the AF information. The result determined by the focus-estimating section 31 is transferred to the overall estimation section 34.

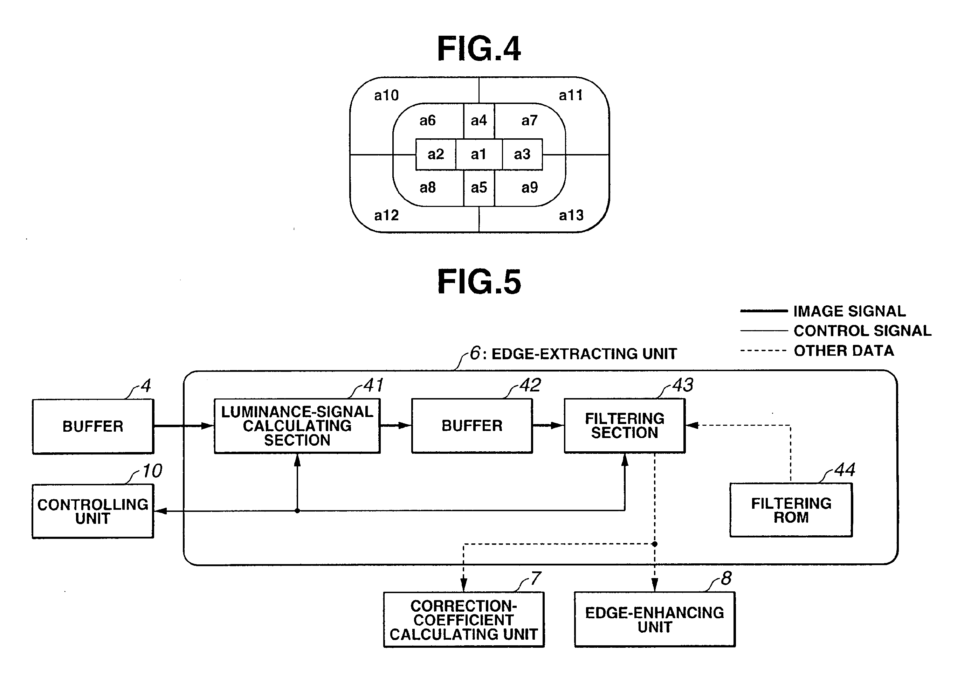

The subject-color-distribution estimating section 32 divides an image signal supplied from the buffer 4 into, for example, 13 regions, a1 to a13 shown in Fig. 4, under the control of the controlling unit 10. Fig. 4 is an illustration for explaining an area division pattern of an image.

Referring to Fig. 4, the subject-color-distribution estimating section 32 divides an area constituting the image signals into a central portion, an inner circumferential portion surrounding the central portion, and an outer circumferential portion surrounding the inner circumferential portion. These portions are divided into the following regions.

The central portion is divided into the middle region a1, the left region a2, and the right region a3.

The inner circumferential portion is divided into the region a4 disposed above the middle region a1, the region a5 below the middle region a1, the region a6 on the left of the region a4, the region a7 on the right of the region a4, the region a8 on the left of the region a5, and the region a9 on the right of the region a5.

The outer circumferential portion is divided into the upper-left region a10, the upper-right region a11, the lower-left region a12, and the lower-right region a13.

The subject-color-distribution estimating section 32 converts R, G, and B signals into signals in a predetermined color space, for example, the L*a*b* color space. The conversion to the L*a*b* color-space signals is performed via the conversion to X, Y, and Z signals, as described below.

Firstly, the subject-color-distribution estimating section 32 converts R, G, and B signals into X, Y, and Z signals, as shown in the following expression 4:

[Expression 4]

$$X = 0.607R + 0.174G + 0.200B$$

$$Y = 0.299R + 0.587G + 0.114B$$

$$Z = 0.000R + 0.0661G + 1.116B$$

The subject-color-distribution estimating section 32 then converts these X, Y, and Z signals into L*, a*, and b* signals, as shown in the following expression 5:

[Expression 5]

$$L* = 116f\left(\frac{Y}{Y_n}\right) - 16$$

$$a* = 500\left\{f\left(\frac{X}{X_n}\right) - f\left(\frac{Y}{Y_n}\right)\right\}$$

$$b* = 200\left\{f\left(\frac{Y}{Y_n}\right) - f\left(\frac{Z}{Z_n}\right)\right\}$$

where the function f is defined by the following expression 6:

[Expression 6]

$$f\left(\frac{X}{X_n}\right) = \begin{cases} \left(\frac{X}{X_n}\right)^{\frac{1}{3}} & \left(\text{for } \frac{X}{X_n} > 0.008856\right) \\ 7.787\left(\frac{X}{X_n}\right) + \frac{16}{116} & \left(\text{for } \frac{X}{X_n} \leq 0.008856\right) \end{cases}$$

The subject-color-distribution estimating section 32 then calculates an average color according to the signal value in the L*a*b* color space with respect to each of the regions a1 to a13, and transfers the calculating results to the overall estimation section 34.

The night-scene estimating section 33 acquires AE information set in the preprocessing unit 3 from the controlling unit 10 and estimates that, when its exposure time is longer than a predetermined shutter speed and also an average luminance level of the entire image area is equal to or less than a predetermined threshold, the image is a night scene, under the control of the controlling unit 10. The result estimated by the night-scene estimating section 33 is transferred to the overall estimation section 34.

The overall estimation section 34 is included in the scene estimating means and estimates a scene with respect to the overall image using information supplied from the focus-estimating section 31, the subject-color-distribution estimating section 32, and the night-scene estimating section 33 under the control of the controlling unit 10.

In other words, when receiving information indicating a night scene from the night-scene estimating section 33, the overall estimation section 34 estimates that the scene is a night scene and transfers the result to the correction-coefficient calculating unit 7.

On the other hand, when it is estimated that the captured image is not a night scene, the overall estimation section 34 estimates the scene using the result from the focus-estimating section 31 and information indicating average colors for the regions a1 to a13 from the subject-color-distribution estimating section 32.

When the AF information from the focus-estimating section 31 denotes a range of 5 m to infinity, the overall estimation section 34 estimates that the scene is a landscape. At this time, when an average color of at least one of the region a10 and the region a11 is the color of the sky, the overall estimation section 34 estimates that the landscape includes the sky at its upper portion. On the other hand, even when the AF information indicates a range of 5 m to infinity, if neither of the average colors of the regions a10 and a11 is the color of the sky, the overall estimation section 34 estimates that the landscape includes no or less sky at its upper portion. In this case, it is estimated that an object having a texture, such as a plant or building, is the main subject.

When the AF information from the focus-estimating section 31 indicates a range of 1 m to 5 m, if an average color of the region a4 is the color of human skin and neither of the average colors of the regions a6 or a7 is the color of human skin, the overall estimation section 34 estimates that the captured image is a portrait of a single person; if all the average colors of the regions a4, a6, and a7 are the color of human skin, the overall estimation section 34 estimates that the captured image is a portrait of a plurality of persons; and if neither of the average colors of the regions a4, a6, and a7 is the color of human skin, the overall estimation section 34 estimates that the captured image is of another kind.

When the AF information from the focus-estimating section 31 indicates a range of less than 1 m, the overall estimation section 34 estimates that the image is captured by macrophotography. In this case, if the difference in the luminance value between the regions a2 and a3 is equal to or higher than a threshold, the image is estimated to be captured by macrophotography for a plurality of objects. By contrast, if the difference in the luminance value between the regions a2 and a3 is less than the threshold, the image is estimated to be captured by macrophotography for a single object.

As described above, the result estimated by the overall estimation section 34 is transferred to the correction-coefficient calculating unit 7.

Fig. 5 is a block diagram showing an example of the structure of the edge-extracting unit 6.

This edge-extracting unit 6 includes a luminance-signal calculating section 41 for reading an image signal stored in the buffer 4 in units of pixels and calculating a luminance signal with respect to each pixel; a buffer 42 for storing the luminance signals calculated by the luminance-signal calculating section 41 in units of pixels with respect to the overall image signal; a filtering ROM 44 for storing a filter coefficient configured as a matrix used for filtering; and a filtering section 43 for reading the luminance signals stored in the buffer 42 in units of areas, each having a predetermined size, calculating an edge component using the matrix filter coefficient read from the filtering ROM 44, and transferring the edge component to the correction-coefficient calculating unit 7 and the edge-enhancing unit 8.

The controlling unit 10 is interactively connected to the luminance-signal calculating section 41 and the filtering section 43 so as to control these sections.

The flow of processing in this edge-extracting unit 6 will now be described below.

The luminance-signal calculating section 41 reads an image signal stored in the buffer 4 in units of pixels under the control of the controlling unit 10 and calculates a luminance signal by using expression 3.

The buffer 42 sequentially stores the luminance signal calculated by the luminance-signal calculating section 41 in units of pixels, and finally stores all the luminance signals in the overall image signal.

After the luminance signals are calculated from the overall image signals, as described above, the filtering section 43 then reads a filter coefficient configured as a matrix used for filtering from the filtering ROM 44 under the control of the controlling unit 10.

The filtering section 43 reads the luminance signals stored in the buffer 42 in units of areas having a predetermined size (e.g., $5 \times 5$ pixels) and calculates an edge component using the matrix filter coefficient under the control of the controlling unit 10. The filtering section 43 transfers the calculated edge component to the correction-coefficient calculating unit 7 and the edge-enhancing unit 8.

The filtering section 43 calculates the edge components from the luminance all signals under the control of the controlling unit 10 while moving an area having a predetermined size pixel by pixel in the horizontal or vertical direction.

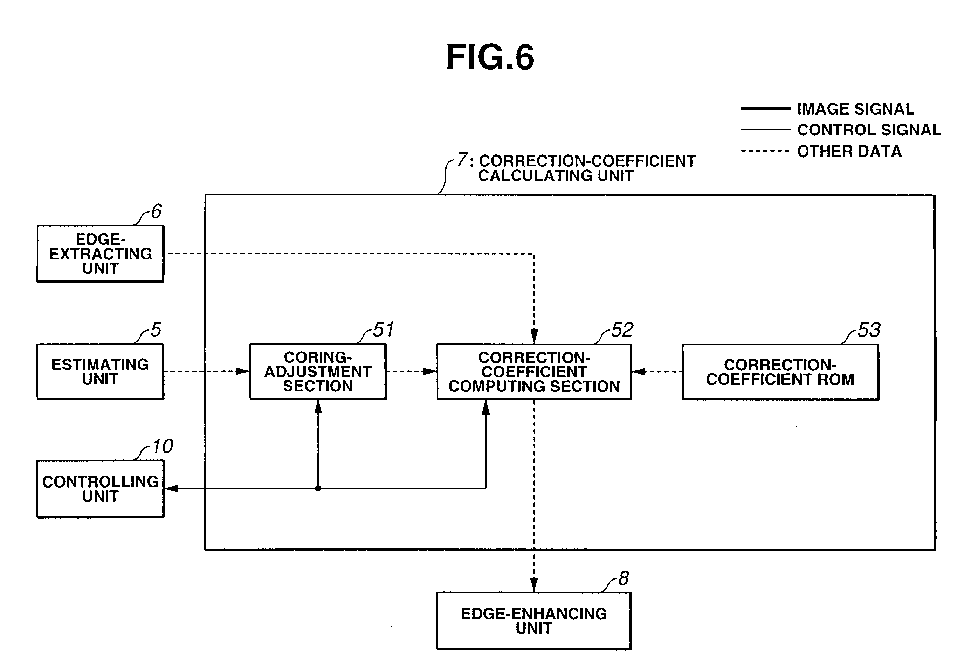

Fig. 6 is a block diagram showing an example of the structure of the correction-coefficient calculating unit 7.

This correction-coefficient calculating unit 7 includes a coring-adjustment section 51 serving as coring-adjustment means for setting a coring range Th for a threshold to perform coring on the basis of the estimated amount transferred from the estimating unit 5 in units of pixels; a correction coefficient ROM 53 storing a function or table associating an input edge component with an output edge component, as shown in Fig. 8 described later; and a correction-coefficient computing section 52 for calculating a correction coefficient with respect to the edge component supplied from the edge-extracting unit 6 by adding the coring range Th functioning as a bias component supplied from the coring-adjustment section 51 to the function or table read from the correction coefficient ROM 53 and transferring the correction coefficient to the edge-enhancing unit 8.

The controlling unit 10 is interactively connected to the coring-adjustment section 51 and the correction-coefficient computing section 52 so as to control these sections.

As described above, the coring-adjustment section 51 sets the threshold range Th for coring on the basis of the estimated amount transferred from the estimating unit 5 in units of pixels under the control of the controlling unit 10.

Fig. 8 is a diagram for explaining a coring adjustment.

Coring is the process where the input edge component is replaced with zero so as to make the output edge component zero. The coring range can be set freely. In other words, as shown in Fig. 8, when the input edge component is equal to or less than the coring-adjustment range (threshold) Th, the edge-enhancing unit 8 carries out coring for making the output edge component zero. This coring-adjustment range Th can be variably set in the coring-adjustment section 51.

For example, in a case in which the estimating unit 5 performs noise estimation, as described above by referring to Fig. 2, the coring-adjustment section 51 multiplies an estimated amount of noise by a coefficient (e.g., 1.1) allowing a predetermined margin to be contained in the noise, so that the resulting value is set as the coring-adjustment range Th.

On the other hand, in a case in which the estimating unit 5 performs scene estimation, as described above by referring to Fig. 3, the coring-adjustment section 51 varies the coring-adjustment range Th in accordance with an estimated scene.

Specifically, for an image whose scene is estimated to have relatively much noise, the coring-adjustment section 51 sets the coring-adjustment range at a larger value ThL; for an image whose scene is estimated to have relatively little noise, the coring-adjustment range is set at a smaller value ThS; and the coring-adjustment range is set at a standard intermediate value between ThS and ThL otherwise.

In other words, when the estimating unit 5 as shown in Fig. 3 estimates that an image is a landscape containing the sky at its upper portion, the coring-adjustment section 51 sets the coring-adjustment range Th at the larger value ThL, since the sky is uniform and any noise component therein would be more annoying.

When the estimating unit 5 estimates that an image is a landscape containing no or less sky at its upper portion, the main subject is estimated to be an object having a texture, such as a plant or a building. Therefore, the coring-adjustment section 51 sets the coring-adjustment range Th at an intermediate value between ThS and ThL.

When the estimating unit 5 estimates that an image is a portrait of a single person, the face area is relatively large, thus increasing the uniform area, and additionally, the fine structure of hair must be considered. Therefore, the coring-adjustment section 51 sets the coring-adjustment range Th at an intermediate value between ThS and ThL.

When the estimating unit 5 estimates that an image is a portrait of a plurality of persons, the area for their faces is relatively small and the fine structure of hair is less recognizable. Therefore, the coring-adjustment section 51 sets the coring-adjustment range Th at the larger value ThL.

When the estimating unit 5 estimates that an image is of another kind, the subject is unidentified. Therefore, for versatility, the coring-adjustment section 51 sets the coring-adjustment range Th at an intermediate value between ThS and ThL.

When the estimating unit 5 estimates that an image is captured by macrophotography for a plurality of objects, the main subject is estimated to have fine structure. Therefore, the coring-adjustment section 51 sets the coring-adjustment range Th at the smaller value ThS.

When the estimating unit 5 estimates that an image is captured by macrophotography for a single object, it is impossible to determine whether fine structure is included or not. Therefore, for versatility, the coring-adjustment section 51 sets the coring-adjustment range Th at an intermediate value between ThS and ThL.

As described above, the coring-adjustment range Th specified by the coring-adjustment section 51 in accordance with the result estimated by the estimating unit 5 is transferred to the correction-coefficient computing section 52.

The correction-coefficient computing section 52 reads the function or table used for edge correction, as shown in Fig. 8, from the correction coefficient ROM 53 and transfers to the edge-enhancing unit 8 a value in which the coring-adjustment range Th functioning as a bias component supplied from the coring-adjustment section 51 is added to the read function or table, the value serving as a correction coefficient with respect to the edge component from the edge-extracting unit 6, under the control of the controlling unit 10. The edge-enhancing unit 8 performs edge enhancement including coring on the basis of the edge component from the edge-extracting unit 6 and the correction coefficient from the correction-coefficient computing section 52.

The processing of calculating a correction coefficient by the correction-coefficient computing section 52, as described above, is sequentially carried out in units of pixels under the control of the controlling unit 10.

Therefore, for the estimating unit 5 estimating noise, an edge component that is equal to or less than an estimated amount of noise is replaced with zero, so that edge enhancement realizes a reduction in noise. For the estimating unit 5 estimating a scene, edges are enhanced in accordance with the scene, thus realizing a high quality image.

In the foregoing description, hardware processing is a prerequisite; however, the present invention is not limited to this. For example, an image signal supplied from the CCD 2 may be unprocessed RAW data, and header information, including the ISO sensitivity and the size of the image data, may be added to the RAW data. The RAW data with the header information may be output to a processor, such as a computer, so that the processor can process the RAW data.

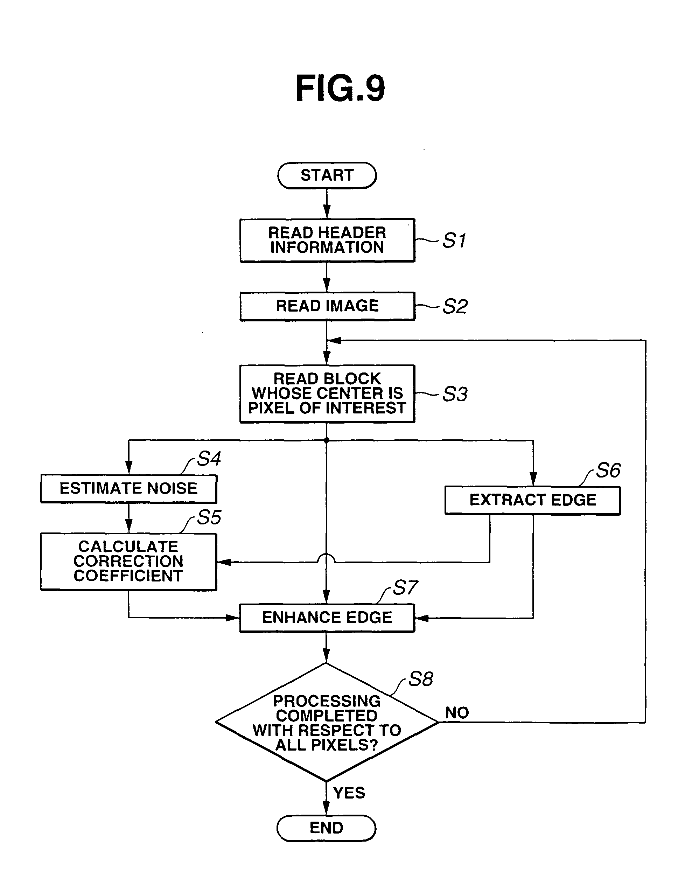

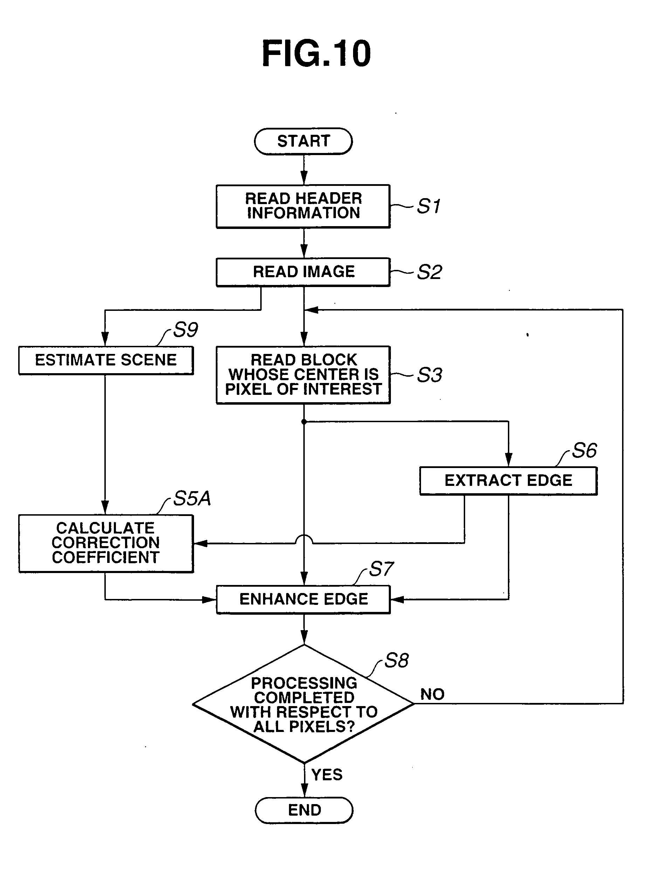

An example of processing based on the signal-processing program executed in a computer will now be described with reference to Figs. 9 and 10.

Fig. 9 is a flowchart showing an example of software signal processing in accordance with noise estimation.

Upon starting the processing, header information, including the ISO sensitivity and the size of the image data, as described above, is read (step S1), and then the image of RAW data is read (step S2).

Next, a block, which has a predetermined size (e.g., $7 \times 7$ pixels), whose center is a pixel of interest is read from the RAW data (step S3).

Noise is then estimated in units of pixels of interest using data of the read block (step S4), and in parallel with this noise estimation process, an edge component is extracted in units of pixels of interest (step S6). As an alternative to parallel processing, both processes may be performed sequentially in any order.

On the basis of the results in step S4 and step S6, a correction coefficient with respect to the edge component is calculated (step S5).

On the basis of the correction coefficient calculated in step S5 and the edge component extracted in step S6, edge enhancement is carried out in units of pixels of interest (step S7)

It is determined whether the processing is completed with respect to all pixels in the image (step S8), and the processing returns to step S3 and repeats the above processes until completion.

As described above, when it is determined that the processing is completed with respect to all pixels in step S8, the processing is ended.

Fig. 10 is a flowchart showing an example of software signal processing in accordance with scene estimation. In Fig. 10, the same processes as in Fig. 9 have the same reference numerals, and the explanation thereof is omitted.

After step S2, the processes of steps S3 and S6 are performed, and in parallel with these processes, a scene of the overall image is estimated using the read RAW data (step S9). As an alternative to parallel processing, the processes may be performed sequentially in any order.

On the basis of the scene estimated in step S9 and the edge component extracted in step S6 in units of pixels of interest, a correction coefficient with respect to the edge component is calculated (step S5A).

The subsequent processes are the same as those in Fig. 9.

The CCD 2 may be a one, two, or three primary-color or complementary-color CCDs. When one CCD is employed, for example, the preprocessing unit 3 performs interpolation to adjust signals through one CCD to signals suitable for three CCDs.

In this embodiment, the amount of noise is calculated by the noise calculating section 26 with reference to the parameter ROM 27 by using a function. However, the present invention is not limited to this. For example, a table storing the amount of noise may be used. In this case, the amount of noise can be calculated with high accuracy at high speed.

In this first embodiment, a correction coefficient used in edge enhancement varies in accordance with an estimated amount of noise or an estimated scene. Therefore, edge enhancement corresponding to the scene is optimized, thus realizing a high quality image.

Additionally, coring adjustment involved in the edge enhancement is adaptively corrected in accordance with the estimated amount of noise or the estimated scene, so that enhancement of an artifact resulting from noise or noise itself can be reduced, thus realizing a high quality image.

Furthermore, since the amount of noise is estimated in accordance with the luminance value and the amplification factor in units of pixels, the amount of noise can be estimated with high accuracy.

Moreover, since information indicating the amount of noise is saved in the form of a function, the capacity required to store function information in a ROM is small, thus achieving cost reduction. When the information indicating the amount of noise is saved in the form of a table, the amount of noise can be calculated with high accuracy at high speed.

Additionally, even when the amplification factor required to calculate the amount of noise is not provided, the standard value is added. Therefore, the amount of noise is estimated even in such a case, and this ensures stable operation.

Further, since a scene is estimated in accordance with a characteristic color in an image and a range where this characteristic color is present, the scene for the overall image area is estimated at high speed and low cost.

Second Embodiment

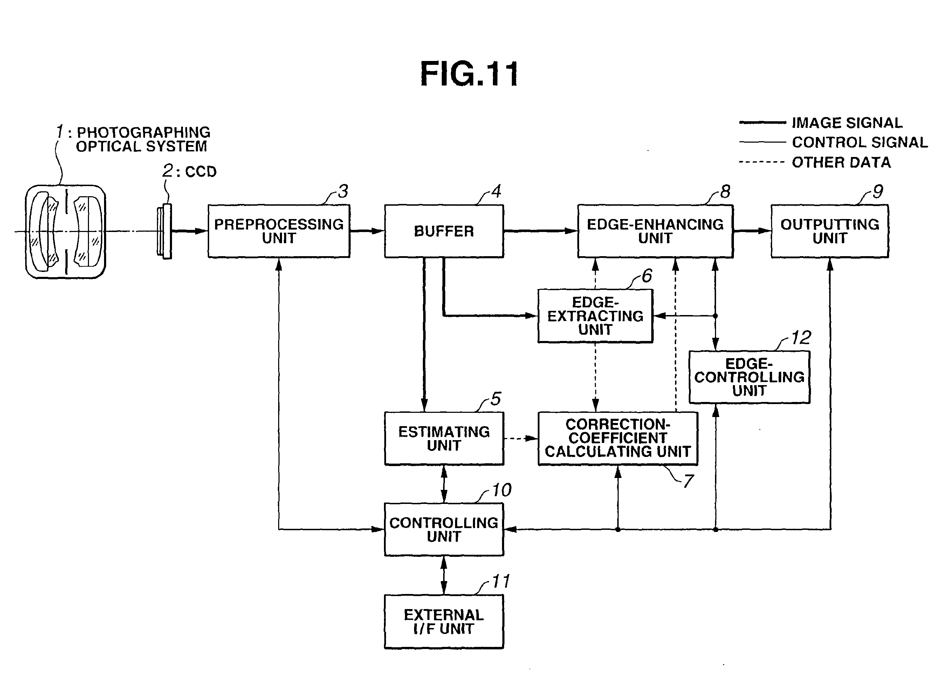

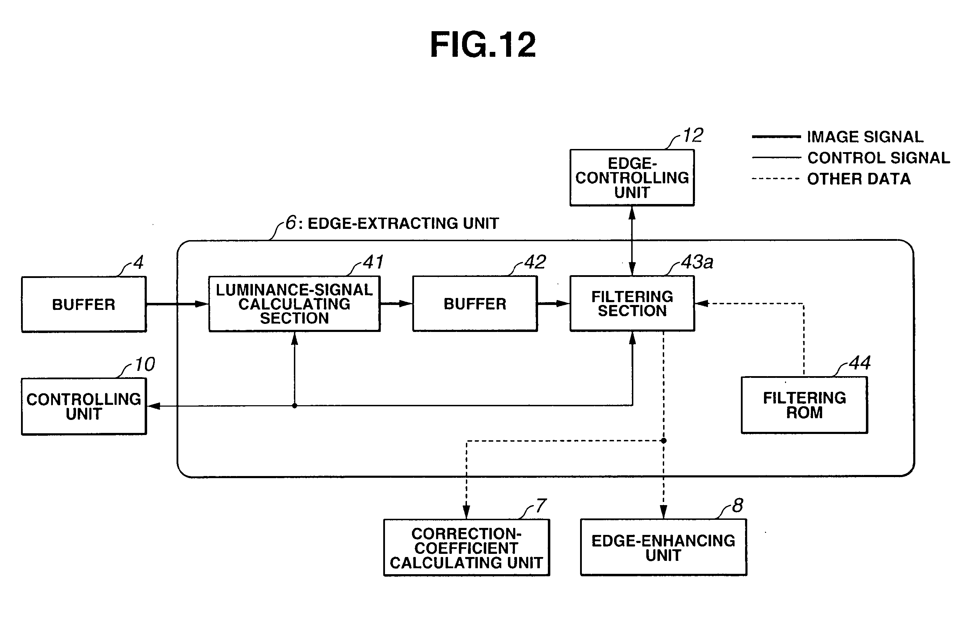

Figs. 11 and 12 illustrate a second embodiment of the present invention. Fig. 11 is a block diagram showing the structure of the signal-processing system. Fig. 12 is a block diagram showing an example of the structure of the edge-extracting unit.

In this second embodiment, the same reference numerals are used as in the first embodiment for similar parts and the explanation thereof is omitted; the differences will be mainly described.

As shown in Fig. 11, the signal-processing system of the second embodiment is the same as that shown in Fig. 1, except that an edge-controlling unit 12 serving as edge-controlling means is added.

The edge-controlling unit 12 is used for controlling operations of the edge-extracting unit 6 and the edge-enhancing unit 8 under the control of the controlling unit 10 and is interactively connected to the edge-extracting unit 6, the edge-enhancing unit 8, and the controlling unit 10.

The flow of signals in the signal-processing system shown in Fig. 11 will now be described.

The edge-extracting unit 6 extracts and reads an area having a predetermined size from an image signal stored in the buffer 4 and extracts an edge component in the area under the control of the controlling unit 10.

The controlling unit 10 refers to a result estimated by the estimating unit 5 and can stop the edge-extracting unit 6 operating via the edge-controlling unit 12 according to the result. In a case where the operation of the edge-extracting unit 6 is stopped, edge enhancement with respect to the center pixel of the predetermined area is not performed.

For example, for the estimating unit 5 estimating noise, when the estimated amount of noise exceeds a predetermined threshold, the operation of the edge-extracting unit 6 is stopped. For the estimating unit 5 estimating a scene, when the scene is determined to be a night scene, the operation of the edge-extracting unit 6 is stopped.

The example of the structure of the edge-extracting unit 6 will now be described with reference to Fig. 12.

This edge-extracting unit 6 is substantially the same as the edge-extracting unit 6 as shown in Fig. 5, with the difference that a filtering section 43a is interactively connected to the edge-controlling unit 12 so as to be controlled.

The controlling unit 10 acquires a result estimated by the estimating unit 5 and controls the edge-controlling unit 12 according to the result, thereby allowing either a matrix size of a filter read by the filtering section 43a from the filtering ROM 44 or a coefficient of the matrix, or both, to be switched. The filtering ROM 44 stores a matrix in which a coefficient used for a filter is arranged. For example, as for switching a matrix size, a 5 by 5 matrix is switched to a 3 by 3 matrix; as for switching a coefficient, a Laplacian coefficient is switched to a Sobel coefficient.

The filtering section 43a adaptively switches information to be read from the filtering ROM 44 in accordance with the estimated amount of noise for the estimating unit 5 estimating noise or in accordance with the estimated scene for the estimating unit 5 estimating a scene.

In this case, hardware processing is a prerequisite; however, the present invention is not limited to this. The processing may be performed by software, as is the case with the first embodiment.

According to the second embodiment, substantially the same advantages as in the first embodiment are realized. In addition, since edge extraction can be stopped if needed, edge extraction can be omitted with respect to an area having many noise components or an image of a predetermined scene, thus increasing the speed of the processing.

In a case in which at least one of a matrix size of a filter used to extract an edge or a coefficient of the matrix is switched on the basis of the result of noise estimation or scene estimation, edge extraction extracting no noise component or edge extraction corresponding to the scene can be realized, thus achieving a high quality image.

Switching the matrix size adaptively allows increased speed in processing because filtering is performed without using an unnecessarily large matrix.

Third Embodiment

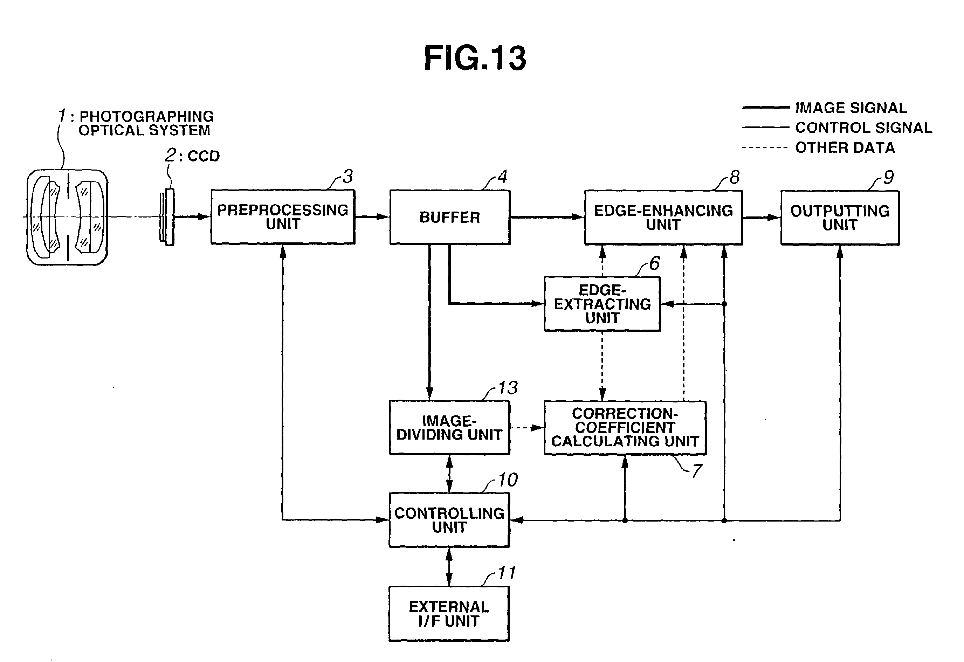

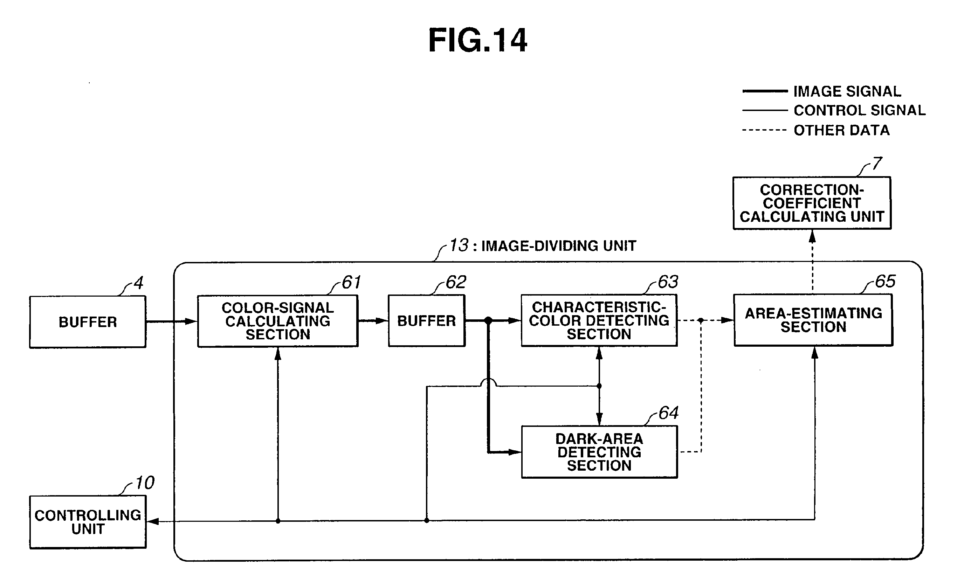

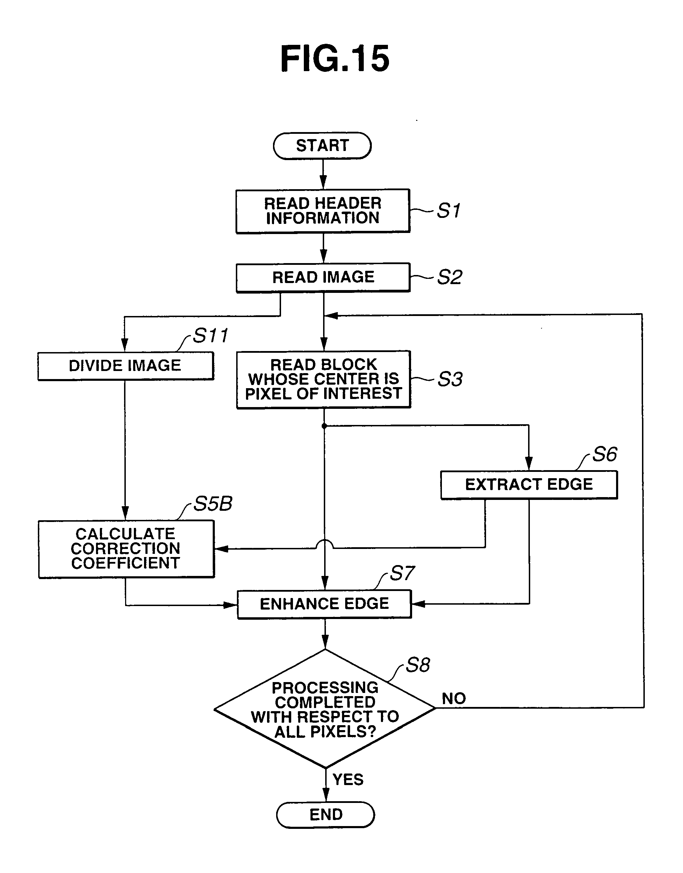

Figs. 13 to 15 illustrate a third embodiment of the present invention. Fig. 13 is a block diagram showing the structure of the signal-processing system. Fig. 14 is a block diagram showing an example of the structure of an image-dividing unit. Fig. 15 is a flowchart showing an example of software signal processing based on a signal-processing program.

In this third embodiment, the same reference numerals are used as in the first and second embodiments for similar parts and the explanation thereof is omitted; the differences will be mainly described.

This signal-processing system is the same as that shown in Fig. 1, except that, in place of the estimating unit 5, an image-dividing unit 13 serving as image-dividing means is provided.

The image-dividing unit 13 divides an image signal stored in the buffer 4 into areas, each having a predetermined size, labels the areas, and transfers their results to the correction-coefficient calculating unit 7. The image-dividing unit 13 is interactively connected to the controlling unit 10 so as to be controlled.

The flow of signals in the signal-processing system as shown in Fig. 13 will now be described.

The image-dividing unit 13 divides an image signal stored in the buffer 4 into areas, each having a predetermined size, labels the areas, and transfers their results to the correction-coefficient calculating unit 7.

The correction-coefficient calculating unit 7 calculates a correction coefficient with respect to an edge component using information on the corresponding area from the image-dividing unit 13 and the edge component supplied from the edge-extracting unit 6 under the control of the controlling unit 10. The correction coefficient calculated by the correction-coefficient calculating unit 7 is transferred to the edge-enhancing unit 8.

The example of the structure of the image-dividing unit 13 will now be described with reference to Fig. 14.

The image-dividing unit 13 includes a color-signal calculating section 61 for reading an image signal stored in the buffer 4 in units of pixels and calculating a color signal; a buffer 62 for storing the color signal calculated by the color-signal calculating section 61; a characteristic-color detecting section 63 for reading the color signal stored in the buffer 62, and dividing and labeling the areas in accordance with color by comparing the read color signal with a predetermined threshold; a dark-area detecting section 64 for reading a signal corresponding to, for example, a luminance signal, from the color signal stored in the buffer 62, and dividing the areas into a dark area and other area and labeling them by comparing the read signal with a predetermined threshold; and an area-estimating section 65 for estimating the areas using information supplied from the characteristic-color detecting section 63 and from the dark-area detecting section 64, labeling the areas with comprehensive labels, and transferring them to the correction-coefficient calculating unit 7.

The controlling unit 10 is interactively connected to the color-signal calculating section 61, the characteristic-color detecting section 63, the dark-area detecting section 64, and the area-estimating section 65 so as to control these sections.

The flow of processing in the image-dividing unit 13 will now be described.

The color-signal calculating section 61 reads an image signal stored in the buffer 4 in units of pixels, calculates a color signal, and transfers the color signal to the buffer 62 under the control of the controlling unit 10. The color signal herein denotes the L*, a*, and b* signals, as explained by referring to the expressions 4 to 6, or the like.

The characteristic-color detecting section 63 reads the a* and b* signals from the L*, a*, and b* signals stored in the buffer 62 and compares these read signals with a predetermined threshold under the control of the controlling unit 10, thereby dividing an image associated with the image signal into a human-skin area, a plant area, a sky area, and an other area. The characteristic-color detecting section 63 then labels the human-skin area, the plant area, the sky area, and the other area with, for example, 1, 2, 3, and 0, respectively, in units of pixels and transfers them to the area-estimating section 65.

The dark-area detecting section 64 reads the L* signal from the L*, a*, and b* signals stored in the buffer 62 and compares it with a predetermined threshold under the control of the controlling unit 10, thereby dividing the image associated with the image signal into a dark area and the other area. The dark-area detecting section 64 then labels the dark area and the other area with, for example, 4 and 0, respectively, in units of pixels and transfers them to the area-estimating section 65.

The area-estimating section 65 sums the labels from the characteristic-color detecting section 63 and the labels from the dark-area detecting section 64 under the control of the controlling unit 10. Specifically, the area-estimating section 65 assigns 1 to the human-skin area, 2 to the plant area, 3 to the sky area, 4 to the dark area, 5 to the human skin and dark area, 6 to the plant and dark area, 7 to the sky and dark area, 0 to the other area, these labels functioning as comprehensive labels, and transfers them to the correction-coefficient calculating unit 7.

The correction-coefficient calculating unit 7 sets the coring-adjustment range Th at an intermediate value between ThS and ThL with respect to areas with label 1 (the human-skin area), label 4 (the dark area), and label 6 (the plant and dark area).

The correction-coefficient calculating unit 7 sets the coring-adjustment range Th at ThS with respect to areas with label 2 (the plant area) and label 0 (the other area).

The correction-coefficient calculating unit 7 sets the coring-adjustment range Th at ThL with respect to areas with label 3 (the sky area), label 5 (the human-skin and dark area), and label 7 (the sky and dark area).

In this embodiment, hardware processing is a prerequisite; however, the present invention is not limited to this. The processing may be performed by software, as is the case with the first and second embodiments.

Referring to Fig. 15, an example of software processing based on the signal-processing system in a computer will now be described. In Fig. 15, the same processes as those of Fig. 9 in the first embodiment have the same reference numerals and the explanation thereof is omitted.

After step S2, the processes of steps S3 and S6 are performed, and in parallel with these processes, an image is divided into areas according to characteristic colors and these divided areas are labeled on the basis of the read RAW data (step S11). As an alternative to parallel processing, the processes may be performed sequentially in any order.

On the basis of the image divided in step S11 and the edge component extracted in step S6 in units of pixels of interest, a correction coefficient with respect to the edge component is calculated (step S5B).

The subsequent processes are the same as those in Fig. 9.

In Fig. 15, the correction coefficient is calculated in units of pixels of interest in step S5B; the calculation may be carried out in units of divided and labeled areas. Similarly, the edge enhancement in step S7 may be performed in units of divided and labeled areas.

According to this third embodiment, substantially the same advantages as in the first and second embodiments are realized. In addition, since edge enhancement is adaptively performed in accordance with the characteristic color contained in the image, high quality is realized. Since the image is divided on the basis of information indicating the color and whether the area is dark or not, the area division is carried out at high speed.

Having described the preferred embodiments of the invention referring to the accompanying drawings, it should be understood that the present invention is not limited to those precise embodiments and various changes and modifications thereof could be made by one skilled in the art without departing from the spirit or scope of the invention as defined in the appended claims.

**Claims**

1. A signal-processing system for performing signal processing in an image signal in digital form, the signal-processing system comprising:

    estimating means for estimating a characteristic amount of an image associated with the image signal on the basis of the image signal;
    edge-extracting means for extracting from the image signal an edge component of the image associated with the image signal;
    correction-coefficient calculating means for calculating a correction coefficient with respect to the edge component on the basis of the characteristic amount; and
    edge-enhancing means for performing edge enhancement with respect to the image signal on the basis of the edge component and the correction coefficient.

2. The signal-processing system according to Claim 1, further comprising:

    edge-controlling means for controlling at least one of the edge-extracting means and the edge-enhancing means on the basis of the characteristic amount.

3. The signal-processing system according to Claim 2,
   wherein the estimating means is the one configured to have noise-estimating means for estimating the amount of noise as the characteristic amount; and
   the edge-controlling means is the one to control so as to stop the operation of the edge-extracting means based on the amount of noise.

4. The signal-processing system according to Claim 2,
   wherein the edge-extracting means is the one to extract the edge component from the image signal using a filter in which a coefficient is arranged so as to correspond to a pixel arrangement of a predetermined size; and
   the edge-controlling means is the one to control the edge-extracting means so as to permit switching of at least one of the size and the coefficient of the filter.

5. The signal-processing system according to Claim 1,
   wherein the estimating means is the one configured to have image-dividing means for dividing the image associated with the image signal into a plurality of areas based on the characteristic amount in the image signal;
   the correction-coefficient calculating means is the one to calculate the correction coefficient for each of the areas divided by the image-dividing means; and
   the edge-enhancing means is the one to perform the edge enhancement with respect to the image signal for each of the areas divided by the image-dividing means.

6. The signal-processing system according to Claim 5,
   wherein the image-dividing means is the one to divide the image associated with the image signal into a plurality of areas based on the color of each pixel as the characteristic amount.

7. The signal-processing system according to Claim 1,
   wherein the estimating means is the one configured to have noise-estimating means for estimating the amount of noise as the characteristic amount; and
   the correction-coefficient calculating means is the one to calculate the correction coefficient with respect to the edge component on the basis of the amount of noise.

8. The signal-processing system according to Claim 7,
   wherein the noise-estimating means comprises:

    image-area extracting means for extracting an area of a predetermined size from the image signal;
    average-luminance calculating means for calculating an average luminance value in the area;
    amplification-factor calculating means for calculating an amplification factor with respect to the image associated with the image signal; and
    noise calculating means for calculating the amount of noise based on the average luminance value and the amplification factor.

9. The signal-processing system according to Claim 8,
wherein the noise calculating means is the one to calculate the amount of noise based on a predetermined functional formula associated with the average luminance value and the amplification factor.

10. The signal-processing system according to Claim 8,
wherein the noise calculating means is the one to calculate the amount of noise based on a predetermined table associated with the average luminance value and the amplification factor.

11. The signal-processing system according to Claim 7,
wherein the edge-enhancing means is the one to perform coring processing of replacing an input edge component with zero so as to make an output edge component thereby; and
the correction-coefficient calculating means is the one configured to have coring-adjusting means for setting an adjusting range of coring processing performed by the edge-enhancing means based on the amount of noise.

12. The signal-processing system according to Claim 9,
wherein the amplification-factor calculating means is the one configured to have standard-value supplying means for supplying a predetermined standard amplification factor when the amplification factor with respect to the image associated with the image signal is not received.

13. The signal-processing system according to Claim 1,
wherein the estimating means is the one configured to have scene-estimating means for estimating a scene of the image associated with the image signal as the characteristic amount; and
the correction-coefficient calculating means is the one to calculate the correction coefficient with respect to the edge component based on the scene.

14. The signal-processing system according to Claim 13,
wherein the scene-estimating means is the one to estimate the scene based on a characteristic color that is contained in the image and is obtained from the image signal and a range where the characteristic color is present.

15. The signal-processing system according to Claim 13,
wherein the edge-enhancing means is the one to perform coring processing of replacing an input edge component with zero so as to make an output edge component; and
the correction-coefficient calculating means is the one configured to have coring-adjusting means for setting an adjusting range of the coring processing performed by the edge-enhancing means based on the scene.

16. A signal-processing method with respect to an image signal in digital form, the signal-processing method comprising steps of:

performing a process of estimating a characteristic amount of an image associated with the image signal based on the image signal and a process of extracting an edge component of the image associated with the image signal from the image signal in any sequence or in parallel with each other;
calculating a correction coefficient with respect to the edge component based on the characteristic amount; and
performing edge enhancement with respect to the image signal based on the edge component and the correction coefficient.

17. The signal-processing method according to Claim 16,
wherein the characteristic amount is the amount of noise.

18. The signal-processing method according to Claim 16,
wherein the characteristic amount is the one associated with a scene.

19. The signal-processing method according to Claim 16, further comprising step of dividing the image associated with the image signal into a plurality of areas based on the characteristic amount contained in the image signal;
wherein the step of calculating the correction-coefficient is the one of calculating the correction coefficient for each of the divided areas; and
the step of performing edge enhancement is the one of performing the edge enhancement for each of the divided areas.

**20.** A signal-processing program for causing a computer to function as:

estimating means for estimating a characteristic amount of an image associated with an image signal in digital form based on the image signal;

edge-extracting means for extracting an edge component of the image associated with the image signal from the image signal;

correction-coefficient calculating means for calculating a correction coefficient with respect to the edge component based on the characteristic amount; and

edge-enhancing means for performing edge enhancement with respect to the image signal based on the edge component and the correction coefficient.

# FIG.1

IMAGE SIGNAL
CONTROL SIGNAL
OTHER DATA

1 : PHOTOGRAPHING OPTICAL SYSTEM

2 : CCD

3 PREPROCESSING UNIT

4 BUFFER

8 EDGE-ENHANCING UNIT

9 OUTPUTTING UNIT

6 EDGE-EXTRACTING UNIT

5 ESTIMATING UNIT

7 CORRECTION-COEFFICIENT CALCULATING UNIT

10 CONTROLLING UNIT

11 EXTERNAL I/F UNIT

EP 1 677 516 A1

# FIG.2

EP 1 677 516 A1

─── IMAGE SIGNAL
─── CONTROL SIGNAL
------ OTHER DATA

5 : ESTIMATING UNIT

4
BUFFER

21
LOCAL-AREA
EXTRACTING
SECTION

22
BUFFER

23
AVERAGE-LUMINANCE
CALCULATING
SECTION

10
CONTROLLING
UNIT

24
GAIN
CALCULATING
SECTION

25
STANDARD-VALUE
SUPPLYING SECTION

26
NOISE
CALCULATING
SECTION

27
PARAMETER
ROM

7
CORRECTION-
COEFFICIENT
CALCULATING
UNIT

# FIG.3

IMAGE SIGNAL
CONTROL SIGNAL
OTHER DATA

5: ESTIMATING UNIT

4 BUFFER

10 CONTROLLING UNIT

31 FOCUS-ESTIMATING SECTION

32 SUBJECT-COLOR-DISTRIBUTION ESTIMATING SECTION

33 NIGHT-SCENE ESTIMATING SECTION

34 OVERALL ESTIMATION SECTION

7 CORRECTION-COEFFICIENT CALCULATING UNIT

19

# FIG.4

|  | a10 |  |  | a11 |  |
|---|---|---|---|---|---|
|  | a6 | a4 | a7 |  |  |
|  | a2 | a1 | a3 |  |  |
|  | a8 | a5 | a9 |  |  |
|  | a12 |  |  | a13 |  |

# FIG.5

EP 1 677 516 A1

─── IMAGE SIGNAL
─── CONTROL SIGNAL
----- OTHER DATA

6: EDGE-EXTRACTING UNIT

BUFFER 4

LUMINANCE-SIGNAL CALCULATING SECTION 41

BUFFER 42

FILTERING SECTION 43

FILTERING ROM 44

CONTROLLING UNIT 10

CORRECTION-COEFFICIENT CALCULATING UNIT 7

EDGE-ENHANCING UNIT 8

# FIG.6

EP 1 677 516 A1

IMAGE SIGNAL
CONTROL SIGNAL
OTHER DATA

7: CORRECTION-COEFFICIENT
CALCULATING UNIT

6
EDGE-
EXTRACTING
UNIT

5
ESTIMATING
UNIT

51
CORING-
ADJUSTMENT
SECTION

52
CORRECTION-
COEFFICIENT
COMPUTING SECTION

53
CORRECTION-
COEFFICIENT ROM

10
CONTROLLING
UNIT

8
EDGE-ENHANCING
UNIT

# FIG.7

AMOUNT OF
NOISE (N)

AMPLIFICATION FACTOR OF 4 (ISO 400)
AMPLIFICATION FACTOR OF 2 (ISO 200)
AMPLIFICATION FACTOR OF 1 (ISO 100)

LUMINANCE
VALUE (Y)

# FIG.8

OUTPUT EDGE
COMPONENT

INPUT EDGE COMPONENT

Ths ⟶ ThL

# FIG.9

START

READ HEADER INFORMATION — S1

READ IMAGE — S2

READ BLOCK WHOSE CENTER IS PIXEL OF INTEREST — S3

S4 — ESTIMATE NOISE

S6 — EXTRACT EDGE

S5 — CALCULATE CORRECTION COEFFICIENT

S7 — ENHANCE EDGE

S8 — PROCESSING COMPLETED WITH RESPECT TO ALL PIXELS?

NO

YES

END

# FIG.10

START

READ HEADER INFORMATION — S1

READ IMAGE — S2

ESTIMATE SCENE — S9

READ BLOCK WHOSE CENTER IS PIXEL OF INTEREST — S3

EXTRACT EDGE — S6

CALCULATE CORRECTION COEFFICIENT — S5A

ENHANCE EDGE — S7

PROCESSING COMPLETED WITH RESPECT TO ALL PIXELS? — S8    NO

YES

END

EP 1 677 516 A1

25

# FIG.11

IMAGE SIGNAL
CONTROL SIGNAL
OTHER DATA

1: PHOTOGRAPHING OPTICAL SYSTEM
2: CCD

3 PREPROCESSING UNIT
4 BUFFER
5 ESTIMATING UNIT
6 EDGE-EXTRACTING UNIT
7 CORRECTION-COEFFICIENT CALCULATING UNIT
8 EDGE-ENHANCING UNIT
9 OUTPUTTING UNIT
10 CONTROLLING UNIT
11 EXTERNAL I/F UNIT
12 EDGE-CONTROLLING UNIT

# FIG.12

Legend:
- —— IMAGE SIGNAL
- — CONTROL SIGNAL
- ------ OTHER DATA

6: EDGE-EXTRACTING UNIT

- 12 EDGE-CONTROLLING UNIT
- 4 BUFFER
- 41 LUMINANCE-SIGNAL CALCULATING SECTION
- 42 BUFFER
- 43a FILTERING SECTION
- 44 FILTERING ROM
- 10 CONTROLLING UNIT
- 7 CORRECTION-COEFFICIENT CALCULATING UNIT
- 8 EDGE-ENHANCING UNIT

EP 1 677 516 A1

# FIG.13

1 : PHOTOGRAPHING OPTICAL SYSTEM

2 : CCD

IMAGE SIGNAL
CONTROL SIGNAL
OTHER DATA

PREPROCESSING UNIT  3

BUFFER  4

EDGE-ENHANCING UNIT  8

OUTPUTTING UNIT  9

EDGE-EXTRACTING UNIT  6

IMAGE-DIVIDING UNIT  13

CORRECTION-COEFFICIENT CALCULATING UNIT  7

CONTROLLING UNIT  10

EXTERNAL I/F UNIT  11

EP 1 677 516 A1

# FIG.14

IMAGE SIGNAL
CONTROL SIGNAL
OTHER DATA

*7*
CORRECTION-COEFFICIENT CALCULATING UNIT

*13* : IMAGE-DIVIDING UNIT

*4*
BUFFER

*61*
COLOR-SIGNAL CALCULATING SECTION

*62*
BUFFER

*63*
CHARACTERISTIC-COLOR DETECTING SECTION

*65*
AREA-ESTIMATING SECTION

*64*
DARK-AREA DETECTING SECTION

*10*
CONTROLLING UNIT

EP 1 677 516 A1

# FIG.15

```
                    ( START )
                        |
                        v
              +-------------------+
              |   READ HEADER     |——S1
              |   INFORMATION     |
              +-------------------+
                        |
                        v
              +-------------------+
              |    READ IMAGE     |——S2
              +-------------------+
                 |              |
        S11      |              |
         v       v              v
+----------------+      +-------------------+
| DIVIDE IMAGE   |      |   READ BLOCK      |——S3
+----------------+      | WHOSE CENTER IS   |
        |               | PIXEL OF INTEREST |
        |               +-------------------+
        |                     |       |
        |                     |       |          S6
        |                     |       v           v
        |                     |   +------------------+
        |                     |   |  EXTRACT EDGE    |
        |                     |   +------------------+
   S5B  |                     |            |
    v   |                     |            |
+----------------+           |            |
|  CALCULATE     |<----------+            |
|  CORRECTION    |                        |
|  COEFFICIENT   |                        |
+----------------+                        |
        |               S7                |
        |                v                |
        |      +-------------------+      |
        +----->|   ENHANCE EDGE    |<-----+
               +-------------------+
                        |
                        v            S8
                   /------------\
                  /  PROCESSING  \
                 /   COMPLETED    \    NO
                (  WITH RESPECT TO )------>
                 \  ALL PIXELS?   /
                  \              /
                   \------------/
                        |
                        | YES
                        v
                    (  END  )
```

## INTERNATIONAL SEARCH REPORT

| | International application No. |
|---|---|
| | PCT/JP2004/015080 |

| A. CLASSIFICATION OF SUBJECT MATTER |
|---|
| Int.Cl⁷ H04N5/208 |

According to International Patent Classification (IPC) or to both national classification and IPC

| B. FIELDS SEARCHED |
|---|
| Minimum documentation searched (classification system followed by classification symbols) |
| Int.Cl⁷ H04N5/208 |

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2005 |
| Kokai Jitsuyo Shinan Koho | 1971–2005 | Toroku Jitsuyo Shinan Koho | 1994–2005 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 6-86098 A (Matsushita Electric Industrial Co., Ltd.),<br>25 March, 1994 (25.03.94),<br>Par. Nos. [0010] to [0015]; Fig. 1<br>(Family: none) | 1,7,16,17,20<br>2-6,8-15,18,<br>19 |
| Y | Microfilm of the specification and drawings annexed to the request of Japanese Utility Model Application No. 56915/1986(Laid-open No. 169572/1987)<br>(Sanyo Electric Co., Ltd.),<br>27 October, 1987 (27.10.87),<br>Full text; Fig. 1<br>(Family: none) | 2-4 |

| ☒ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 11 January, 2005 (11.01.05) | 01 February, 2005 (01.02.05) |

| Name and mailing address of the ISA/<br>Japanese Patent Office | Authorized officer |
|---|---|
| Facsimile No. | Telephone No. |

Form PCT/ISA/210 (second sheet) (January 2004)

**INTERNATIONAL SEARCH REPORT**

| International application No. |
| --- |
| PCT/JP2004/015080 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2002-109526 A  (Ricoh Co., Ltd.),<br>12 April, 2002 (12.04.02),<br>Par. Nos. [0062] to [0063]; Figs. 9, 10<br>(Family: none) | 4 |
| Y | JP 2003-69821 A  (Olympus Optical Co., Ltd.),<br>07 March, 2003 (07.03.03),<br>Par. Nos. [0060] to [0083]; Figs. 3 to 6<br>(Family: none) | 5,6,19 |
| Y | JP 2002-112108 A  (Ricoh Co., Ltd.),<br>12 April, 2002 (12.04.02),<br>Full text; all drawings<br>(Family: none) | 8-12 |
| Y | JP 2003-18453 A  (Minolta Co., Ltd.),<br>17 January, 2003 (17.01.03),<br>Par. Nos. [0119] to [0126]; Figs. 9, 18<br>& US 2003/7076 A1 | 13-15,18 |
| Y | JP 2002-354498 A  (Nikon Corp.),<br>06 December 2002 (06.12.02),<br>Par. Nos. [0028] to [0030]; Figs. 6, 7<br>& US 2003/1958 A1 | 14 |

Form PCT/ISA/210 (continuation of second sheet) (January 2004)